# NEW EUROPEAN PATENT SPECIFICATION

(11) **EP 0 281 383 B2**
(45) Date of publication and mention of the opposition decision: **19.07.1995**
(45) Mention of the grant of the patent: 20.05.1992
(21) Application number: 88301828.5
(22) Date of filing: 02.03.1988
(51) Int. Cl.: A01F 12/44

(54) **Rotary crop separators and concaves therefor**
Siebtrommel für Ernteprodukte und Dreschkorb dazu
Tambour cribleur pour la récolte et contre-batteur pour cela

(30) Priority: 02.03.1987 US 22293
(43) Date of publication of application: 07.09.1988
(73) Proprietor: DEERE & COMPANY, Moline, Illinois 61265 (US)
(72) Inventor: Turner, Reed James, E. Moline Illinois 612644 (US); Peters, Loren William, Bettendorf Iowa 52722 (US); Wilson, John Edward, Coal Valley Illinois 61240 (US); Bennett, Robert Edwin, Moline Illinois 61265 (US)
(74) Representative: Smith, Philip Antony

(56) References cited:
- EP-A- 0 173 224
- EP-A- 0 173 225
- AU-B- 12 363
- BE-A- 366 637
- DE-A- 3 017 988
- DE-A- 3 023 961
- FR-A- 2 621 216
- GB-A- 1 184 894
- SU-A- 378 182
- US-A- 1 191 853
- US-A- 2 457 259
- Prospektblatt MOULET

## Description

The invention relates to a foraminous concave (also known as a grate) for cooperation with a rotor in a separator, wherein the concave partially wraps the separator and comprises an array of axially and circumferentially spaced openings for the passage of material separated from a crop mat dragged over the concave by the rotating rotor. The invention also relates to separators with such concaves. Concaves and separators of this kind are very well known, e.g. US-A-959,561; US-A-1,191,853; US-A-2,457,259; US-A-4,312,365 and US-A-4,312,366. Some of the known concaves additionally have fingers projecting inwardly towards the rotor (US-A-2,457,259 and US-A-1,191,853).

In use, the foraminous concave cooperates with the rotor to define a separating and/or threshing zone where crop material is processed and divided and grain and smaller fractions of the material pass through the openings or foramina, typically to a cleaning shoe.

The individual openings of the conventional separating grate or bar-type threshing concave are of slot or cell form, usually elongated in the circumferential direction. In one form, especially common as a threshing concave, the openings are defined by spaced apart axially extending bars through which circumferentially extending wires or rods are threaded to create a series of rectangular slots or cells. In another form, common in axial flow rotary separators, the foramina are oval or rectangular slots punched in a sheet metal portion of a cylindrical separator casing surrounding a rotor.

In the operation of threshing and separating devices having concaves or grates with rectangular or oval slots of limited circumferential extent, the rotating element (threshing cylinder or separating rotor) impels or drags crop material circumferentially over the foraminous surface and the rotationally downstream end of a slot acts as a barrier or dead end with respect to flow of some of the material. This general configuration of grate or concave is structurally convenient and the interruptions in the slots or openings contribute to the separating or threshing function by providing a series of spaced working surfaces or impedances. However, in some operating conditions, particularly when crop moisture is high, the impedance becomes too great and material begins to hairpin or mat over the grate structure and the rotor is unable to keep the grate clear In corn harvesting for example, stalks, leaves or silks, hairpin or paste over the slot walls (or rods in a conventional bar concave), and ends until the openings are plugged. In dry conditions crop material may lay as a mat on top of the concave rods and retard flow of grain through the grate.

In separating grates and threshing concaves, grid or cell opening geometry is a compromise between achieving desired separating efficiency and avoiding choking or plugging. The problem of plugging cannot be solved by making the grate apertures larger. Desired separation level would be lost and too much coarse material would go through to the cleaning shoe.

US-A-1,191,853, discloses a threshing and separating concave for use with a spike tooth threshing cylinder in which adjustably reclining peg teeth emerge from slots between circumferential grate bars. The grate bars are supported and spaced by cross bar members whose inverted triangular cross-section, it is claimed, helps prevent their collecting material. The grate design is claimed to be virtually unpluggable, but the basic form is still a rectangular cell with potential for collecting material by wrapping or hairpinning especially at the closed end of the cells defined by the cross bars.

US-A-959,561 claims to have reduced the possibility of blockage in a purely separating grate by creating a two surface arrangement in which a radially inner surface of substantially continuous circumferential vanes supports straw away from contact with any transverse member. But of course in this arrangement the functional contribution of transverse members in the threshing or separating surface is missing. And, even though the transverse members are offset considerably below (radially outwards) the circumferential vanes it is still possible for them to collect material and develop a blockage.

SU-A-378182 discloses a foraminous concave for cooperation with a rotor in a separator wherein the concave partially wraps the separator and comprises an array of axially and circumferentially spaced openings for the passage of material separated from a crop mat dragged over the concave by the rotating rotor, the concave comprising a series of circumferentially spaced transverse supports and spaced fingers extending generally circumferentially from a transverse support and pointing downstream towards the next tranverse support but terminating short thereof so that the opening formed between the fingers is not closed at its downstream end, each transverse support forming part of an assembly which comprises pairs of axially-spaced fingers connected by an upstream back portion attached to the transverse support.

The object to provide a separating concave (or grate) for a rotary separator which, in cooperation with a suitable rotor, is capable of handling a wide variety of types and condition of crop material, smoothly and without plugging.

According to the invention, there is provided a concave as defined in claim 1. The invention also provides a crop separator as defined in claim 12.

In the preferred construction, a concave or grate has generally rectangular cells define by rotationally upstream and downstream walls or members and by spaced apart circumferentially extending side members, all lying approximately in a common arcuate surface. The side members are interrupted adjacent their downstream ends and adjacent the downstream cell walls so as to provide opportunity for lateral release of material and movement of material along and against the downstream walls. The side members are thus in the form of fingers pointing downstream. Crop material may exist or migrate laterally from the cell, allowing bunches of material to dissipate. The opportunity for lateral movement of crop material at the closed end of a cell, as for example against a transverse bar of a conventional bar type threshing concave, makes the separator less sensitive to variations or uneveness in crop material feeding or in crop material condition.

According to the invention, the separating or threshing surface is defined by a series of spaced apart finger bar assemblies transverse to the direction of crop material flow. In each, a support bar carries a series of spaced apart fingers extending generally in a downstream circumferential direction. Each finger ends somewhat upstream of the succeeding transverse bar assembly so as to define a generally radially extending opening between successive finger bar assemblies. By the use of a finger bar as the principal element in a separating or threshing grate, manufacturing cost may be reduced compared with, for example, a conventional bar-type threshing concave in which rods must be threaded through holes punched in relatively thick threshing bars.

Adjustments in the character of the internal working surface of the grate of concave may readily be made to enhance performance in particular threshing or separating applications. For example, in a separator application, each finger bar assembly may be disposed so that the fingers extend rotationally downstream and are inclined inwards towards the separator rotor. This "exposes" the ends of the fingers somewhat, making it easier for them to shed any hairpinned material. Also the step-down or "shingled" effect encountered by crop material as it is propelled by a rotor from one finger bar assembly onto the next may enhance separation efficiency.

In keeping with the invention, cantilevered fingers in a separator finger bar assembly may be made resilient, or the assembly itself may be resiliently mounted, so that fingers can yield in conditions of uneven and heavy feeding to allow a slug of material to pass and reduce the possibility of plugging or choking the separator.

In a threshing concave application, the fingers of axially extending concave bar assemblies may be inclined somewhat outwards relative to the threshing cylinder. In this way the upstream edge or surface of each succeeding bar assembly is exposed, as is required for impacting or rubbing of crop material to achieve efficient threshing. At the same time, at least the upstream portions of the fingers may be maintained radially relatively close to the threshing cylinder, effectively reducing the depth of "pockets" in which material may collect and plug and improving the wiping action of the cylinder with respect to the concave. These modifications - inclining the fingers radially inwards or outwards - create variations in the working surface but, collectively, the successive bar assemblies still define essentially a continuous arcuate working surface of limited radial variation.

The invention will be described in more detail, by way of example, with reference to the accompanying drawings, in which:
Figure 1 is a somewhat schematic left-hand side elevation of the threshing section and an upstream portion of the twin rotor axial flow rotary separating section of a combine harvester embodying the invention.
Figure 2 is an enlarged cross sectional view taken approximately on line 2-2 of Figure 1 of the left-hand portion of the separator.
Figure 3 is a further enlarged partial view taken approximately on line 3-3 of Figure 2, showing a portion of a separator finger bar assembly.
Figure 4 is an end view of a modified finger bar assembly.
Figure 5 shows an adjustment arrangement for a finger bar assembly.
Figure 6 is a view, somewhat similar to Figure 1, of the threshing section and portions of the feed and separator sections of a combine harvester having an alternative embodiment of the invention.
Figure 7 is an enlarged partial view taken from Figure 6 showing details of the threshing concave and cylinder.
Figure 8 is a partial view taken approximately on line 8-8 of Figure 7 showing the form of the concave bar assemblies of the alternative embodiment.

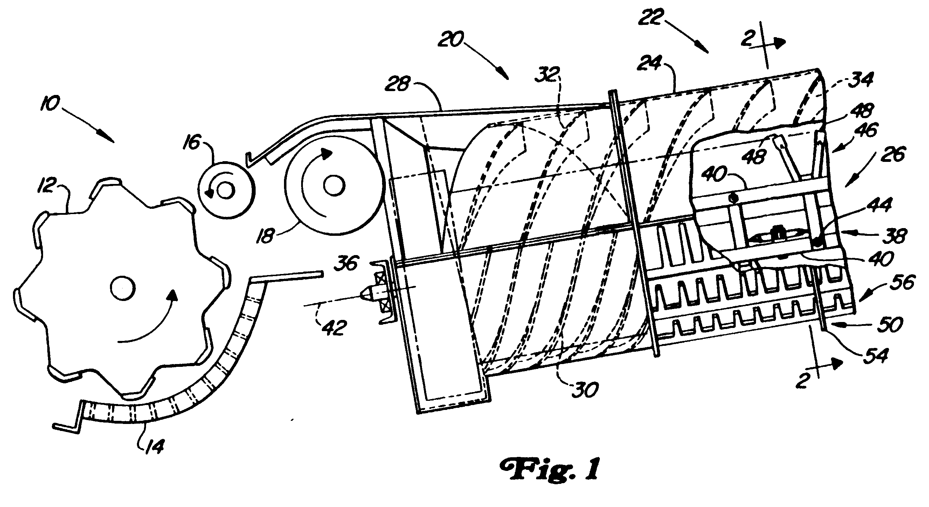

The invention is embodied in a combine harvester, portions of the principal functional units of which are shown in Fig. 1. In the following description, designations of left and right are as they would be sensed by a person standing behind the combine and looking in the direction of travel. Harvested crop material is received by the threshing section 10 where a conventional threshing cylinder 12 and concave 14 cooperate to thresh and begin the separation of the harvested material. Grain and other small fractions pass downwards through the concave 14 to a cleaning shoe (not shown), while straw and remaining unseparated grain are delivered rearwardly and, guided by stripper 16 and beater 18, into a separator feed section 20 for feeding to the separator proper 22. The casing or housing 24 of the separator house a pair of separator rotors 26 which extend forward into the feed housing 28. In the feed housing 28, the rotors 26 receive a generally rearwardly directed stream of material from the beater 18 and divide and form it into an annular mat for propulsion downstream in a generally spiral path in contact respectively with the walls of the feed housing 28 and of the twin halves of the separator casing 24. The downstream propulsion of the crop material depends on generally helical guide vanes 30, 32 in the feed housing 28 and guide vanes 34 in the separator casing 24.

The rotors 26 and separator casing halves 24 are identical except for being opposite left and right hand and only the left side need be described. Rotor 26 is journaled at its forward end in bearing 36. An open frame or core assembly 38, includes four longitudinal frame members 40 symmetrically spaced about the rotor axis 42. The rotor frame members 40 pivotably support, at pivots 44, a plurality of crop engaging elements or fingers 46, each including a pair of crop engaging portions 48, free to be deflected in a fore and aft direction by virtue of the pivot 44. A threshing and separating arrangement of this general type is described in more detail in copending U.S. patent applications Serial Nos. 861467 and 861468, both filed 9 May 1986 and assigned to the assignee of the present invention.

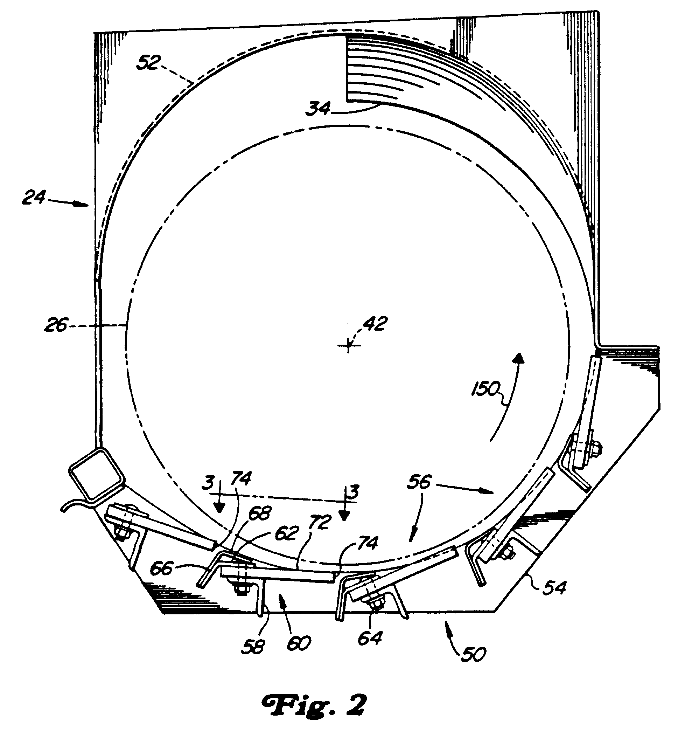

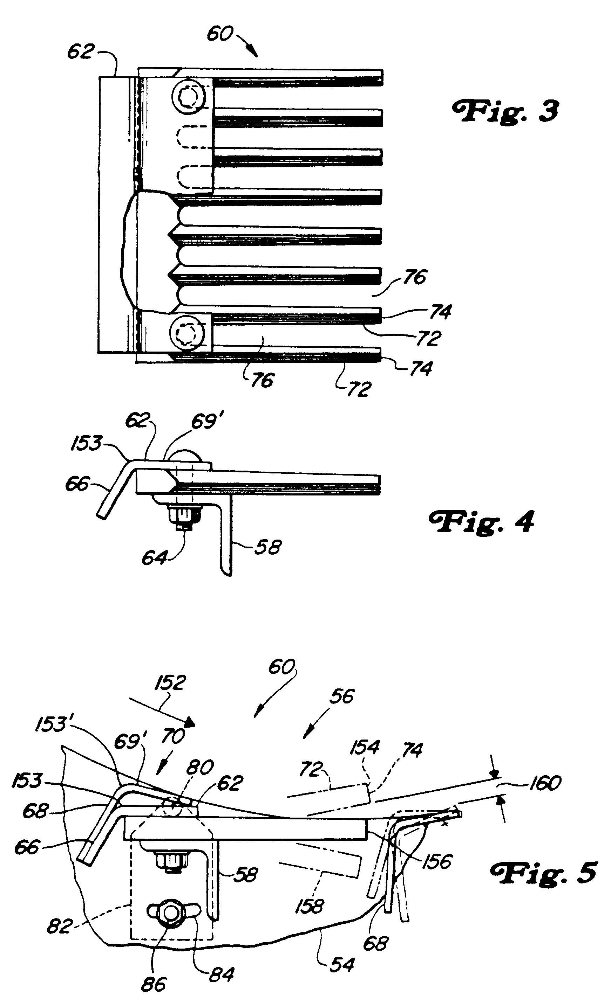

The invention particularly concerns the separator portion 22, the left-hand portion of which is shown in cross section in some detail in Fig. 2. The rotor axis 42 is offset downwards so that the rotor tine crop engaging portions 48 sweep closely above a separating grate assembly 50 comprising a bottom portion of the separator casing 24. The upper portion of the casing 52 is imperforate sheet metal and supports the separator guide vanes 34. In the grate assembly 50, longitudinally spaced bulkheads 54 support a series of five finger bar assemblies 56 in closely spaced circumferential array. In each finger bar assembly 56 (as seen also in Figure 5) a support angle 58 provides structural and cantilevered support for a plurality of plastic separator finger groups 60 extending rotationally downstream from the support angle 58 and clamped in position by an axially extending clamp plate 62 and suitable hardware 64. An upstream defector flange 66 of the clamp plate 62 extends generally radially but somewhat upstream. A cover 68 establishes a profile or bead 70 at the rotationally upstream end of the finger groups 60. Detail of a typical finger group 60 is shown in Fig. 3. The comb-like plastic structure includes a plurality of fingers 72, cantilevered and with functional tips 74, and spaces 76 between the fingers.

As shown in Figure 5, each finger bar assembly 56 may be made rotationally adjustable about a pivot axis 80 extending parallel to the rotor axis 42. A clamping lug 82 rigidly attached to the finger bar assembly is releasably and adjustably clamped to the one of grate assembly bulkheads 54 by means of slot 84 and suitable clamping hardware 86.

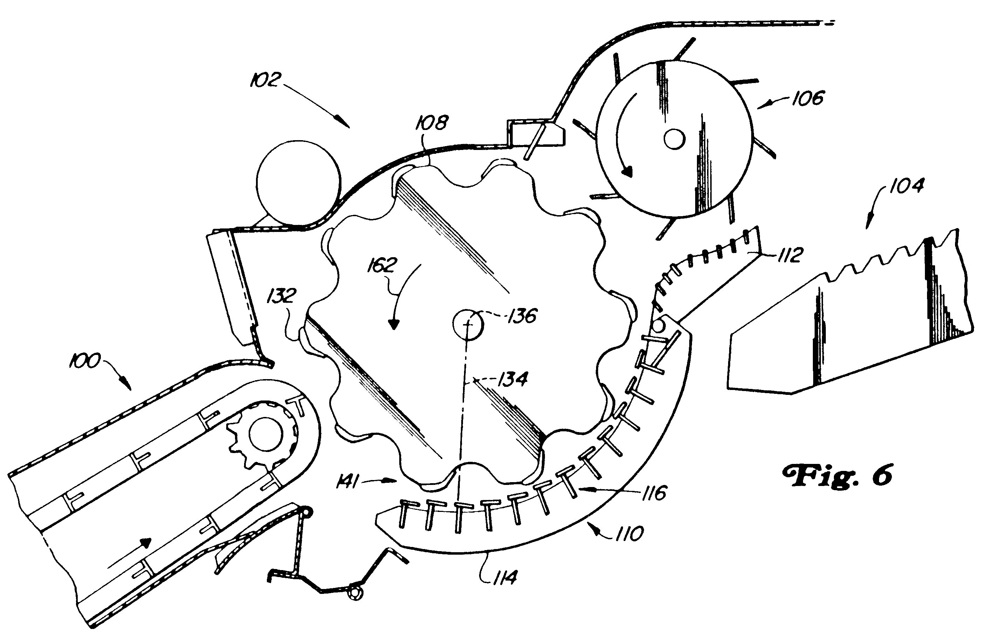

Figure 6 illustrates an alternative application of the invention. The environment is generally that of a so-called conventional combine in which a feeder conveyor 100 delivers gathered or harvested crop material to a threshing section 102 which, in turn, delivers straw and unseparated grain to a bank of straw walkers 104 for further separation, the delivery being assisted by beater 106. The threshing section 102 comprises a conventional rasp bar cylinder 108, cooperating with a concave 110 which partially wraps the cylinder and which, although generally conventional in overall form and shape, is constructed in accordance with the invention. A concave extension or beater grate 112 is conventional.

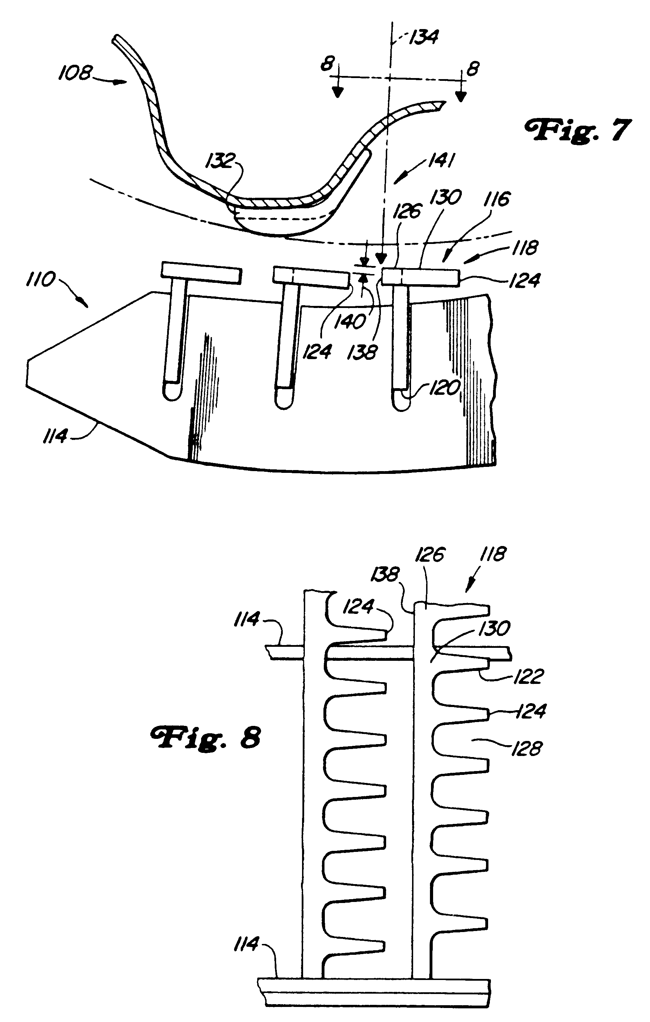

In the concave assembly 110, shown in more detail in Figures 7 and 8, axially spaced arcuate bulkheads or support bars 114 support a series of finger bar assemblies 116, closely spaced in circumferential array. In each finger bar assembly 116, a finger or concave bar 118 is supported and reinforced by a finger bar support 120, in turn supported by the bulkheads 114 of the concave assembly. Each finger or concave bar 118 is in the form of an elongated comb in which fingers or lobes 122 extend rotationally downstream, terminating in a finger or lobe tip 124 closely adjacent the spine or bar 126 of the adjacent downstream finger bar. Notches or spaces 128 separate the fingers 122.

Although details are not shown, the concave assembly 110 is conventionally adjustable to vary the radial clearance between it and the cylinder 108. As shown in Figure 6, the arcuate concave surface defined collectively by the inner faces 130 of the fingers 118 is approximately concentric with the cylinder 108 and is closely swept by the cylinder rasp bars 132 although, as is conventional, clearances may be somewhat greater at the entry to the concave.

Each finger bar assembly 116 is disposed so that the inner surfaces 130 of the finger bar are approximately tangential to the cylinder generated by the rotation of the threshing cylinder 108. More precisely, and as indicated in Figure 7, each surface 130 is perpendicular to a radial line such as line 134 extending from the center 136 of the threshing cylinder and passing through the leading or upstream edge 138 of the finger bar 118. This disposition creates a stepped or washboard-like surface in which at least a portion of the leading edge 138 of the finger bar is exposed (as indicated at 140 in Figure 7), for direct impact by crop material passing circumferentially in the material processing zone 141 between threshing cylinder and concave.

In the operation of the embodiment shown in Figures 1 to 5, crop material such as corn or small grain is gathered by conventional means, not shown, and delivered to the portion of the combine commonly called the separator, and including in this case the thrashing, infeed and separator sactions 10, 20 and 22 respectively. Treatment of the crop material in the thrashing section 10 is generally conventional and results in a portion of the crop material, principally straw and unseparated grain, being conveyed through the infeed section 20 and propelled into the separator section 22 as an annular mat of crop material, generally in contact with the walls of the separator casing 24 and moving downstream in a generally spiral path, propelled circumferentially by the rotor 26 and urged downstream by the guide vanes 34. The material is thus propelled in a mat over the surface of the grate 50 in the direction indicated by the arrows 150, 152 in Figures 2 and 5 respectively. In each pass over the grate, separation of grain and other small fractions of the material takes place through a combination of the effects of centrifugal force and agitation of the material, due to the nature of the surface of the grate, including friction and irregularities. Grain and other small fractions passes radially outwards through the spaces or cells 76 between the fingers 72 for delivery to a cleaning shoe (not shown in the drawings). Any material which hairpins on or partially wraps one of the fingers 72 is drawn along the finger to be freed at the space between the fingertip 74 and the finger cover 68. The material is then free, according to its shape, size and length, to continue its circumferential path within the separator or to pass generally radially outwards and be delivered to the cleaning shoe with the separated grain. The radially inner or top surface 69 of the finger cover member 68 (or the corresponding surface 69' of the clamp plate 62, if cover 68 is not used) is sufficiently broad in a circumferential direction to discourage hairpinning so that material readily passes circumferentially downstream to continue the separating process. Flow of material is also assisted by the rounded corners 153 on the covers 68 (or 153' on clamp plate 62 if the cover 68 is not used). The deflector flanges 66 are inclined somewhat forwardly of the radial (with respect to the rotor center 42) so that any crop material tending to pass between the fingers 72 and encountering the inclined deflector surface 66 is at least partially guided back into the interior of the separator.

In many crop and operating conditions, substantially blockage-free operation with good separating efficiency is obtained with "elevation" or inward angling of the fingers 72, as indicated by the somewhat exaggerated position 154 in Figure 5. In this position there is not only a circumferential gap between the fingertip 74 and the finger cover 68, but also radial separation 160, so that the self cleaning characteristic of the rotationally downstream cantilevered finger is enhanced. If necessary for strength, web-like fingers of deeper cross section could be used without significantly affecting function. But for separating efficiency, the openness of the cells 76 (between the fingers) must be maintained and there must be the equivalent of the free end 74 to allow material to shed from the comb-like surface.

In more easily handled crops, a lower elevation, or even neutral position of the finger as indicated at 156 in Figure 5 gives good results and, because the inner surface of the grate is effectively smoother, the separator may consume less power in operation.

The separator grate surface may be made more aggressive by "depressing" the fingers 72 or angling them outwards in the direction indicated by 158 in Figure 5. This exposes the finger cover 68 to direct impact by crop material as it is propelled in the direction shown by the arrow 152 in Figure 5. This configuration provides more agitation for the crop material and, if rotor speeds are high enough, opportunity for some secondary threshing due to impact on the finger cover 68.

As seen best in Figure 2 the bead form provided by use of the finger cover member 68 in combination with the exposed fingers 72 produces an effective concavity in the inner surface of the finger bar assembly 56, so that the grate assembly 50 as a whole conforms more closely to a cylindrical or arcuate surface. Alternatively, the fingers themselves may be curved (not shown) to approximate the cylindrical surface. For a particular orientation of the fingers 72 the use of the cover 68 softens the grate's characteristics but it may optionally be removed as indicated in Figure 4.

For efficient separation, finger (and hence cell) length must be limited so that an excessive amount of straw does not pass outwards between the fingers to the cleaning shoe. The periodic encounter of crop material with the finger support bar structure (particularly cover 68 or clamp plate 62) helps to contain it within the separator housing so that separation can continue. For example, good results have been obtained in separators of about 0.6m housing diameter when each finger bar assembly spans about 30 degrees of arc. The circumferential span of the finger support assemblies (especially inner surfaces 69, 69') should generally be not less than about 35mm.

The relatively smooth, low friction surface of the separator grate of the first embodiment makes it particularly compatible with an eccentrically mounted tined rotor (as shown in Figures 1 and 2) which, in operation, intermittently penetrates and positively propels the crop material mat. But a grate according to the invention may also be used to advantage in a more conventional axial flow rotary separator having a concentrically mounted rotor with fixed crop material engaging elements.

A further advantage of a separator grate of the first embodiment is that, compared with punched sheet metal and other conventional grates, grain damage is reduced. There are no sharp edges, and when the fingers are angled inwards there are a minimum of surfaces for grain to impact upon. Resilient construction of fingers or of the finger bar mounting also contribute to gentle handling of material.

In the operation of the second embodiment, covered by Figures 6 to 8, as the harvester advances over a field, crop material is gathered conventionally by means not shown and delivered through the feeder conveyor 100 (Figure 6) to the threshing section 102. There the threshing cylinder 108 rotating in the conventional direction as indicated by arrow 162, cooperates with the concave 110 to thresh and begin separation of the material in the material processing zone 141 between them. The bulk of the threshed grain and other small fractions passes through the concave 110 for delivery to a cleaning shoe (not shown) while straw is discharged rearwardly over the beater grate 112 assisted by the beater 106 and delivered to the straw walker 104, where additional separation of grain takes place.

The major functional portion of the concave assembly 110 consists of the arcuate array of circumferentially spaced axially extending finger bar assemblies 116 which, at least in part, duplicate functions of the time-proven conventional bar-type concave. The relative depression or angling outwards of the inner surfaces 130 of the finger bars or combs 118 exposes the leading edge 138 of the finger bar (see 140 in Figure 7), providing an adequate area or surface for the threshing by impact which accounts for a major portion of the threshing in a conventional rasp-bar cylinder/bar-concave threshing combination. The edges 138 also serve as deflecting surfaces, diverting grain outwards through the concave for maximum separation. At the same time, in this concave according to the invention, the necessary open cell-like structure required for a separation is retained (spaces 128 between the fingers 122). However the circumferential gap between the fingertips 124 and the upstream edge 138 of the immediately downstream finger bar 118 provides for each cell, escape slots from the cell and opportunity for any material tending to bunch up or hang up on the leading edge 138 of the finger bar to move or migrate laterally and avoid accumulations of material sufficient to cause blocking or plugging of the concave. Avoidance of efficiency-reducing build up of material on the surface of the concave is also helped by the proximity of the circumferentially upstream portion of the inner surface 130 of the finger bar 118, to the threshing cylinder 108, so that each rasp bar 132 sweeps close to the finger bar surface helping to keep the grate or concave clean. This proximity also provides additional rubbing surface compared with a conventional bar type concave with the potential for enhancing threshing capacity

Compared with the conventional bar type concave, threshing concaves according to the invention (110 in Figure 6) , are potentially lower in manufacturing cost. In parts fabrication, the punching of relatively small holes in heavy bars may be avoided and in assembly, the labor intensive operation of threading the concave rods or wires through the holes of the bars also may be eliminated.

In both embodiments described above and in general, concaves or grates according to the invention have an important advantage over conventional concaves and grates. Any crop material that would tend to "hairpin" on the circumferentially extending rods or wires of a conventional structure, loses its support at the free ends of the finger-like elements of a structure according to the invention, so that the crop material, according to its size and nature, might migrate radially outwards through the generally radially extending gap between the ends of the fingers and the next finger bar or comb, or it may move laterally to reduce bunching and assist in self cleaning, or it may be drawn radially inwards over the "threshold" of the next finger bar backing member, and be free to continue its downstream circumferential movement propelled by rotor or cylinder.

In grates or concaves according to a preferred embodiment of the invention both the upstream back or support bar portion of the finger bar or comb and the fingers themselves are active in an arcuate surface, cooperating in supporting and processing a circumferentially moving mat of material in substantially a single layer of activity. The grate or concave which, functionally, is defined entirely by the circumferentially spaced array of finger bars or combs may be assembled or adjusted to suit particular crop applications and operations such as separating or threshing or a combination of the two. Each finger bar or finger bar assembly comprises a module of the grate or concave. As modules they may be assembled or adjusted for different relative angularities and, if desired, they may be offset laterally so that the fingers and the cell-like spaces 128 between them may be staggered as shown in Figure 8 for a modification of the grate surface character.

## Claims

1. A foraminous concave (50;110) for cooperation with a rotor (26;108) in a separator (22;102) wherein the concave partially wraps the separator and comprises an array of axially and circumferentially spaced openings (76;128) for the passage of material separated from a crop mat dragged over the concave by the rotating rotor, the concave comprising a series of circumferentially spaced transverse supports and spaced fingers (72;122) extending generally circumferentially from a transverse support and pointing downstream towards the next transverse support but terminating short thereof so that the opening (76;128) formed between the fingers (72;122) is not closed at its downstream end, each transverse support forming part of a finger bar assembly which comprises a finger bar comprising axially spaced fingers connected by an upstream back portion, said finger bar being attached to the transverse support, the back portion being the spine of a comb having a row of said fingers which define the openings.

2. A concave according to claim 1, characterised in that the tips (74;124) of the fingers (72;122) are radially offset relative to the next downstream finger bar assembly (56;116).

3. A concave according to claim 1, characterised in that the finger bar assemblies (56) are adjustable about an axis (80) extending lengthwise of the assembly to adjust the angle of the fingers (72) thereof relative to the circumferential direction.

4. A concave according to claim 1, 2 or 3, characterised in that at least some fingers (72) extend in a tangential direction.

5. A concave according to claim 1, 2 or 3 characterised in that at least some fingers (72) are inclined outwardly from a tangential direction.

6. A concave according to claim 1, 2 or 3, characterised in that at least some fingers (72) are inclined inwardly from a tangential direction.

7. A concave according to claim 6, characterised by a cover (68) on the upstream edge of an assembly (56) with inwardly inclined fingers (72), which cover stands proud and reduces the radial step which would otherwise exist from the tips (74) of the fingers (72) of the preceding assembly (56).

8. A concave according to claims 1 to 7, characterised in that the fingers (72;122) are resilient and can deflect outwardly under the action of the crop mat.

9. A concave according to claims 1 to 8, characterised in that the fingers (122) of successive assemblies (116) are axially staggered relative to each other.

10. A concave according to any of claims 1 to 9, characterised in that the fingers (72) of each assembly (56) project from a support member (69,69') having a width in the circumferential direction not less than about 35 mm.

11. A concave according to any of claims 1 to 10, characterised in that the fingers (72) of each assembly (56) project from a support member (62) having along its downstream edge an outwardly projecting inclined flange (66).

12. A crop separator comprising a rotor (26) enclosed by a casing (24) of which a portion is formed by a concave (50) according to any of claims 1 to 11.

13. A crop separator according to claim 12, characterised in that the rotor (26) is mounted eccentrically in the casing (24) so that the minimum clearance therebetween is in the region of the concave (50).

14. A crop separator according to claim 12, characterised in that the fingers (72) extend from support bars (62,68) whose radial clearance from the rotor (26) is substantially equal to the radial clearance at the tips (74) of the fingers (72).

15. A crop separator according to claim 14, characterised in that the radial clearance is greater at intermediate portions of the fingers (72).

16. A crop separator according to claim 12, characterised in that the rotor (108) is a rasp bar cylinder.

## Patentansprüche

1. Ein mit Durchtrittsöffnungen versehener, konkav gekrümmter Teil (50;110) zum Zusammenwirken mit einem Rotor (26;108) in einer Trenneinrichtung (22;102), wobei der konkav gekrümmte Teil die Trenneinrichtung teilweise umschließt und einen Satz von axial und umfänglich in Abständen angeordneter Öffnungen (76;128) für den Durchgang von Material aufweist, das von einer von dem drehenden Rotor über den konkav gekrümmten Teil gezogenen Matte abgeschieden wurde, wobei der konkav gekrümmte Teil eine Anzahl umfänglich einen Abstand zueinander aufweisender Querträger und einen Abstand zueinander aufweisender Finger (72;122) aufweist, die sich im allgemeinen in Umfangsrichtung von einem Querträger aus erstrecken und stromabwärts zu dem nächsten Querträger zeigen aber kurz vor diesem enden, so daß die Öffnung (76;128), die zwischen den Fingern (72;122) gebildet ist, an ihrem stromabwärts gelegenen Ende nicht geschlossen ist, wobei jeder Querträger einen Teil eines Fingerleistenzusammenbaus bildet, die eine Fingerleiste enthält, die axial voneinander getrennte Finger enthält, die durch einen stromaufwärts gelegenen Rückenteil verbunden sind, wobei diese Fingerleiste an dem Querträger angebracht ist, wobei der Rückenteil der Rücken eines Kammes ist, der eine Reihe der besagten Finger besitzt, die die Öffnungen definieren.

2. Konkav gekrümmter Teil nach Anspruch 1, dadurch **gekennzeichnet**, daß die Spitzen (74;124) der Finger (72;122) radial gegenüber der stromabwärts zunächstliegenden Fingerstangen-Anordnung (56;116) versetzt liegen.

3. Konkav gekrümmter Teil nach Anspruch 1 dadurch **gekennzeichnet**, daß die Fingerstangen-Anordnungen (56) um eine Achse (80) einstellbar sind, die sich längs der Anordnung erstreckt, um den Winkel der Finger (72) der Anordnung gegenüber der Umfangsrichtung einzujustieren.

4. Konkav gekrümmter Teil nach Anspruch 1, 2 oder 3, dadurch **gekennzeichnet**, daß wenigtens einige Finger (72) sich in tangentialer Richtung erstrecken.

5. Konkav gekrümmter Teil nach Anspruch 1, 2 oder 3, dadurch **gekennzeichnet**, daß wenigstens einige Finger (72) gegenüber einer tangentialen Richtung nach außen geneigt sind.

6. Konkav gekrümmter Teil nach Anspruch 1, 2 oder 3, dadurch **gekennzeichnet**, daß wenigstens einige Finger (72) gegenüber einer tangentialen Richtung nach innen geneigt sind.

7. Konkav gekrümmter Teil nach Anspruch 6, **gekennzeichnet** durch eine Abdeckung (68) über der stromaufwärts liegenden Kante einer Anordnung (56) mit nach innen geneigten Fingern (72), welche Abdeckung vorsteht und die radiale Stufe verringert, welche sonst gegenüber den Spitzen (74) der Finger (72) der vorangehenden Anordnung (56) besteht.

8. Konkav gekrümmter Teil nach den Ansprüchen 1 bis 7, dadurch **gekennzeichnet**, daß die Finger (72; 122) nachgiebig ausgebildet sind und unter der Wirkung der Erntegutmatte nach außen ausbiegen können.

9. Konkav gekrümmter Teil nach den Ansprüchen 1 bis 8, dadurch **gekennzeichnet**, daß die Finger (122) von aufeinanderfolgenden Anordnungen (116) relativ zueinander axial gestaffelt angeordnet sind.

10. Konkav gekrümmter Teil nach irgendeinem der Ansprüche 1 bis 9, dadurch **gekennzeichnet**, daß die Finger (72) jeder Anordnung (56) von einem Stützglied (69,69') vorspringen, welches in Umfangsrichtung eine Breite aufweist, die nicht kleiner als etwa 35 mm beträgt.

11. Konkav gekrümmter Teil nach irgendeinem der Ansprüche 1 bis 10, dadurch **gekennzeichnet**, daß die Finger (72) jeder Anordnung (56) von einem Stützglied (62) vorspringen, welches entlang seiner stromabwärts liegenden Kante einen nach außen geneigt vorspringenden Flansch (66) aufweist.

12. Ernteguttrenneinrichtung mit einem Rotor (26), der von einem Gehäuse (24) eingeschlossen ist, von dem ein Abschnitt durch einen gekrümmten Teil (50) gemäß irgendeinem der Ansprüche 1 bis 11 gebildet wird.

13. Ernteguttrenneinrichtung nach Anspruch 12, dadurch **gekennzeichnet**, daß der Rotor (26) in dem Gehäuse (24) exzentrisch so angeordnet ist, daß das Minimum an Spiel zwischen diesen im Bereich des konkav gekrümmten Teils (50) liegt.

14. Ernteguttrenneinrichtung nach Anspruch 12, dadurch **gekennzeichnet**, daß die Finger (72) sich von Stützstangen (62,68) aus erstrecken, deren radiales Spiel gegenüber dem Rotor (26) im wesentlichen gleich dem radialen Spiel im Bereich der Spitzen (74) der Finger (72) ist.

15. Ernteguttrenneinrichtung nach Anspruch 14, dadurch **gekennzeichnet**, daß das radiale Spiel in Zwischenbereichen der Finger (72) größer ist.

16. Ernteguttrenneinrichtung nach Anspruch 12, dadurch **gekennzeichnet**, daß der Rotor (108) ein Reibstangenzylinder ist.

## Revendications

1. Contre-batteur ajouré (50;110) destiné à coopérer avec un rotor (26;108) dans un cribleur (22;102), le contre-batteur enveloppant partiellement le cribleur et comportant un réseau d'ouvertures (76;128) espacées axialement et circonférentiellement et permettant le passage du matériau séparé d'un tapis formé d'une récolte et entraîné sur le contre-batteur par le rotor en rotation, le contre-batteur comportant une série de supports transversaux espacés circonférentiellement et de doigts espacés (72;122) qui s'étendent d'une manière générale circonférentiellement à partir d'un support transversal et sont dirigés vers l'avant en direction du support transversal suivant, mais se terminant légèrement en-deçà de ce support transversal de sorte que l'ouverture (76;128) formée entre les doigts (72;122) n'est pas fermée au niveau de son extrémité aval, chaque support transversal faisant partie d'un ensemble à barre équipée de doigts, qui comprend une barre pourvue de doigts espacés axialement, raccordés par une partie arrière amont, ladite barre pourvue de doigts étant fixée au support transversal, et la partie arrière formant le dos d'un peigne possédant une rangée desdits doigts, qui définissent les ouvertures.

2. Contre-batteur ajouré selon la revendication 1, caractérisé en ce que les pointes (74;124) des doigts (72;122) sont décalées radialement par rapport à l'ensemble suivant (56;116) à barre équipée de doigts, présent en aval.

3. Contre-batteur ajouré selon la revendication 1, caractérisé en ce que les ensembles (56) à barres équipées de doigts sont réglables autour d'un axe (80) qui s'étend dans la direction longitudinale de l'ensemble, pour le réglage de l'angle des doigts (72) de ces ensembles par rapport à la direction circonférentielle.

4. Contre-batteur ajouré selon la revendication 1, 2 ou 3, caractérisé en ce qu'au moins certains doigts (72) s'étendent dans une direction tangentielle.

5. Contre-batteur ajouré selon la revendication 1, 2 ou 3, caractérisé en ce qu'au moins certains doigts (72) sont inclinés vers l'extérieur par rapport à une direction tangentielle.

6. Contre-batteur ajouré selon la revendication 1, 2 ou 3, caractérisé en ce qu'au moins certains doigts (72) sont inclinés vers l'intérieur par rapport à une direction tangentielle.

7. Contre-batteur ajouré selon la revendication 6, caractérisé par un couvercle (68) situé sur le bord supérieur d'un ensemble (56) comportant des doigts (72) inclinés vers l'intérieur, ce couvercle étant disposé en saillie et réduisant la partie étagée radiale qui, sinon, est obtenue à partir des pointes (64) des doigts (72) de l'ensemble précédent (56).

8. Contre-batteur ajouré selon les revendications 1 à 7, caractérisé en ce que les doigts (72; 122) sont élastiques et peuvent fléchir vers l'extérieur sous l'action du tapis formé par la récolte.

9. Contre-batteur ajouré selon les revendications 1 à 8, caractérisé en ce que les doigts (122) d'ensembles successifs (116) sont étagés axialement les uns par rapport aux autres.

10. Contre-batteur ajouré selon l'une quelconque des revendications 1 à 9, caractérisé en ce que les doigts (72) de chaque ensemble (56) font saillie à partir d'un élément de support (69,69') possédant une largeur non inférieure à environ 35 mm dans la direction circonférentielle.

11. Contre-batteur ajouré selon l'une quelconque des revendications 1 à 10, caractérisé en ce que les doigts (72) de chaque ensemble (56) font saillie à partir d'un élément de support (62) possédant, le long de son bord aval, une bride inclinée (66), qui fait saillie vers l'extérieur.

12. Cribleur pour récolte comprenant un rotor (26) renfermé dans un carter (24), dont une partie est formée par un contre-batteur (50) selon l'une quelconque des revendications 1 à 11.

13. Cribleur pour récolte selon la revendication 12, caractérisé en ce que le rotor (26) est monté d'une manière excentrée dans le carter (24) de sorte que le jeu minimum entre ces unités est présent dans la région du contre-batteur (50).

14. Cribleur pour récolte selon la revendication 12, caractérisé en ce que les doigts (72) s'étendent à partir de barres de support (62,72), dont l'écartement radial par rapport au rotor (26) est sensiblement égal à l'écartement radial au niveau des pointes (74) des doigts (72).

15. Cribleur pour récolte suivant la revendication 14, caractérisé en ce que le jeu radial est plus important dans des parties intermédiaires des doigts (72).

16. Cribleur pour récolte selon la revendication 12, caractérisé en ce que le rotor (108) est un cylindre à barres formant râpes.
